# EUROPÄISCHE PATENTSCHRIFT

(11) **EP 2 127 382 B1**
(45) Veröffentlichungstag und Bekanntmachung des Hinweises auf die Patenterteilung: **08.04.2015**
(21) Anmeldenummer: 08715891.1
(22) Anmeldetag: 20.02.2008
(51) Int. Cl.: H04N 21/234, H04N 21/258, H04N 21/2662, H04N 21/44, H04N 21/61, H04N 21/81

(54) **VERFAHREN UND SYSTEM ZUM STÖRUNGSFREIEN UMSCHALTEN ZWISCHEN PROGRAMMKANÄLEN IN EINER VIDEOUMGEBUNG**
METHOD AND SYSTEM FOR SWITCHING BETWEEN PROGRAMME CHANNELS WITHOUT INTERFERENCE IN A VIDEO ENVIRONMENT
PROCÉDÉ ET SYSTÈME DE COMMUTATION SANS PROBLÈME ENTRE DES CHAÎNES D'UN ENVIRONNEMENT VIDÉO

(30) Priorität: 23.02.2007 DE 102007009414
(43) Veröffentlichungstag der Anmeldung: 02.12.2009
(73) Patentinhaber: Deutsche Telekom AG, 53113 Bonn (DE)
(72) Erfinder: STUMPF, Alexander, 60489 Frankfurt am Main (DE); DASSOW, Heiko, 64347 Griesheim (DE); ORTH, Torsten, 63768 Hösbach (DE)
(74) Vertreter: Blumbach Zinngrebe
(86) Internationale Anmeldenummer: PCT/EP2008/001320
(87) Internationale Veröffentlichungsnummer: WO 2008/101686

(56) Entgegenhaltungen:
- EP-A- 1 220 542
- WO-A-00/69163
- WO-A-2005/053301
- US-A- 5 602 592
- US-A1- 2002 170 067
- US-A1- 2004 034 864
- WARD C ET AL: "SEAMLESS SPLICING FOR MPEG-2 TRANSPORT STREAM VIDEO SERVERS" SMPTE JOURNAL, SMPTE INC. SCARSDALE, N.Y, US, Bd. 108, Nr. 12, 1. Dezember 1999 (1999-12-01), Seiten 873-879, XP000894173 ISSN: 0036-1682
- MARTIN LJUNGQVIST: 'BAYESIAN DECODING FOR IMPROVED RANDOM ACCESS IN COMPRESSED VIDEO STREAMS' INTERNET CITATION, [Online] 12 Mai 2005, XP002433975 Gefunden im Internet: <URL:http://www.martinljungqvist.com/thesis .pdf> [gefunden am 2007-05-16]

## Beschreibung

Die Erfindung betrifft im allgemeinen eine Video- oder Multimedia-Netzwerkumgebung zum Verteilen von Programmen an eine Vielzahl von Teilnehmern und insbesondere ein Verfahren sowie ein Datenübertragungssystem zum störungsfreien Umschalten von einem ersten Programmkanal auf einen zweiten Programmkanal.

Verfahren und Systeme zur Übertragung von gruppenindividuellen Medienströmen, auch Media-Streams genannt, über ein Verteilernetzwerk sind hinlänglich bekannt. Bei diesen bekannten Verfahren werden verschiedene Medienströme an einem Punkt oder mehreren vorbestimmten Punkten in das Verteilernetz eingespeist und am anderen Ende des Verteilernetzes über sogenannte Multicast-Replikationspunkte gezielt einzelnen Teilnehmern oder Gruppen von Teilnehmern zugeführt.

Ein wesentlicher Gesichtspunkt bei derartigen Multimedia-Kommunikationssystemen ist darin zu sehen, Maßnahmen bereitzustellen, mit denen eine Umschaltung von einem Programmkanal auf einen anderen Programmkanal ermöglicht werden kann. Hierbei tritt häufig das Problem auf, dass beim Umschalten zwischen zwei Programmkanälen eine sichtbare Störung im visualisierten Inhalt beim Teilnehmer wahrgenommen wird. Denn bei der Umschaltung zwischen Kanälen zu einem beliebigen Zeitpunkt ist nicht gewährleistet, dass nach der Umschaltung eine nahtlose Übertragung des Zielkanals beziehungsweise eine unmittelbare Wiedergabe des Zielkanals beim Teilnehmer möglich ist.

Grundsätzlich muss beim Umschalten von einem aktuell dargestellten Programm auf ein neues Programm dafür gesorgt werden, dass zu Beginn der Darstellung des neuen Programms ein Vollbild gesendet wird, so dass ein kontinuierlicher, nahtloser Bildaufbau nach dem Umschaltprozess ermöglicht wird und somit sichtbare Störungen beim Teilnehmer vermieden werden können.

Ein bekanntes Verfahren zum nahtlosen Umschalten zwischen Programmkanälen in einem digitalen videobasierten Unterhaltungsnetzwerk ist beispielsweise aus der US 2004/0034864 A1 bekannt. Darin ist ein System zur Übertragung von digitalen Videosignalen beschrieben, welches eine Kopfstelle aufweist, die unter anderem einen Kodierer, eine Einrichtung zum Erkennen und Auswerten von Kanalwechsel- Nachrichten sowie eine Einrichtung zum Erzeugen von Vollbildern aufweist. Die Kopfstelle ist über ein Verteilernetz mit einer teilnehmerseitigen Endeinrichtung verbunden. Ein Teilnehmer leitet einen Kanalwechsel ein, indem er an seinem Endgerät einen entsprechenden Kanalwechsel-Befehl eingibt, der über das Netzwerk zur Kopfstelle übertragen wird. Unter Auswertung der Kanalwechsel-Nachricht veranlasst die Erkennungseinrichtung der Kopfstelle den Kodierer, einen I-Frame, das heißt ein Vollbild des neuen Zielkanals zu erzeugen. Das Vollbild des neuen Zielkanals wird dann zur Endeinrichtung des Teilnehmers übertragen. Mit anderen Worten erfolgt die eigentliche Umschaltung zwischen Programmkanälen im Kodierer der Kopfstelle.

Die Europäische Patentanmeldung EP 01220542 offenbart ein System und ein Verfahren zur Bereitstellung von Video in guter Qualität mit zielgerichteter Werbung für die Zuschauer über ein paketgeschaltetes Kommunikationsnetz. Programme mit entsprechend eingefügten Splice-Punkten werden über das Netzwerk an Teilnehmer übertragen. Personalisierte Werbung wird dann an den Splice-Punkten in den Videostrom am Austrittsknotenpunkt eingefügt.

Die Amerikanischen Patentanmeldung US 2002/0170067 betrifft ein Verfahren und System zum Videostreaming. Das Verfahren umfasst den Schritt Aufnahme einer Vielzahl von Videoeingangsströme, die jeweils aus der Vielzahl von Videoeingangsströmen über ein IP-basiertes Netzwerk übertragen werden. Es umfasst ferner die Auswahl eines von mehreren Videoeingangsströmen zum Senden als Videoausgangsstrom und die Ausstrahlung des Videoausgangsstroms. Damit kann eine Vielzahl von Videoeingangsströmen über das Internet oder andere IPbasierte Netzwerke selektiv in Echtzeit ausgestrahlt werden.

Der vorliegenden Erfindung liegt nunmehr die Aufgabe zugrunde, ein Verfahren sowie ein Datenübertragungssystem bereitzustellen, welches eine störungsfreie, das heißt nahtlose Umschaltung zwischen Programmkanälen ermöglichen, wenn die Umschaltung von einer zentralen Stelle und nicht von einem Teilnehmer aus gesteuert wird.

Ein Kerngedanke der Erfindung ist darin zu sehen, dass verschiedene Programmdatenströme, die jeweils einem separaten Programmkanal zugeordnet sind, jeweils über einen eigenen Kodierer in ein Verteilernetz eingespeist und zu wenigstens einer Umschalteinrichtung übertragen werden. Kodierer und Umschalteinrichtung sitzen an entfernten Stellen des Verteilernetzes. Die Kodierer befinden sich an der Einspeisstelle. Die wenigstens eine Umschalteinrichtung befindet sich entweder an der Auskopplungsstelle des Verteilernetzes oder in der Nähe eines Endgerätes, wie zum Beispiel in einer dem Endgerät zugeordneten Set-Top-Box. Um nach einem zentral gesteuerten Wechsel eines Programmkanals eine störungsfreie Darstellung von Videoinformationen auf dem Endgerät eines Kunden zu gewährleisten, wird die Kodierung der zu übertragenden Programmdatenströme mit dem Umschaltzeitpunkt synchronisiert. Mit anderen Worten werden Kodierer und Umschalteinrichtung von einer zentralen Stelle aus derart koordiniert, dass ein störungsfreies Umschalten zwischen Programmkanälen möglich ist. Die zentrale Stelle nützt hierbei insbesondere das Wissen aus, dass sich der nach der Umschaltung darzustellende Inhalt von dem vor der Umschaltung dargestellten Inhalt in vorbestimmter Weise unterscheidet. Auf diese Weise ist es möglich, zu nahezu jedem Zeitpunkt zwischen Programmkanälen umzuschalten.

Das oben genannte technische Problem wird zum einen durch ein Verfahren zum Verteilen von kodierten Programmdatenströmen auf mehrere Teilnehmer gelöst. Das Verfahren ermöglicht ein störungsfreies, zentral gesteuertes Umschalten von einem ersten Programmkanal auf einen zweiten Programmkanal. Hierzu werden wenigstens zwei Programmdatenströme, die jeweils einem separaten Programmkanal zugeordnet sind, zu jeweils einem steuerbaren Kodierer übertragen. Im ersten Kodierer werden die dem ersten Programmkanal zugeordneten Programmdatenströme kodiert, während im zweiten Kodierer die dem zweiten Programmkanal zugeordneten Programmdatenströme kodiert werden. Die kodierten Programmdatenströme werden dann in ein Verteilernetz eingespeist. Die dem ersten Programmkanal zugeordneten Programmdatenströme werden über wenigstens eine Weiterleitungseinrichtung wenigstens einem Zielteilnehmer zugeführt, der beispielsweise über ein Fernsehgerät verfügt, an dem die Programmdatenströme zum Beispiel in visueller und/oder akustischer Form wiedergegeben werden können. Für den Fall, dass das Verfahren einen Multicast-Betrieb unterstützt, können die dem ersten Programmkanal zugeordneten Programmdatenströme auch einer vorbestimmten Zielgruppe zugeführt werden. Weiterhin stellt das Verfahren erste und zweite Steuerparameter in einer zentralen Steuereinrichtung bereit, die ein synchronisiertes Aktivieren der Kodierer und wenigstens einer Umschalteinrichtung steuert, um zwischen Programmkanälen störungsfrei umschalten zu können. Störungsfrei bedeutet insbesondere, dass ein Kunde während eines Programmwechsels an seinem Endgerät keine oder vernachlässigbare Störungen wahrnimmt. Das zentral gesteuerte Umschalten vom ersten auf den zweiten Programmkanal erfolgt dadurch, dass der oder die ersten Steuerparameter wenigstens zum zweiten Kodierer, der unter Ansprechen auf die ersten Steuerparameter den dem zweiten Programmkanal zugeordneten Programmdatenstrom in einer vorbestimmten Weise kodiert, übertragen werden.

"In vorbestimmter Weise kodieren" kann bedeuten, dass der Kodierer die Programmdatenströme als Vollbilder oder Teilbilder in Abhängigkeit von den Inhalten der Programmdatenströme kodiert.

Der zweite Steuerparameter wird zur Umschalteinrichtung übertragen, die unter Ansprechen auf die zweiten Steuerparameter die wenigstens eine Weiterleitungseinrichtung veranlasst, die dem zweiten Programmkanal zugeordneten Programmdatenströme zu dem wenigstens einen Zielteilnehmer zu einem Zeitpunkt weiterleitet, zu dem ein störungsfreies Umschalten gewährleistet ist. Dies bedeutet, dass die zum zweiten, das heißt neuen Zielprogrammkanal gehörenden Programmdatenströme erst dann zu den Zielteilnehmern weitergeleitet werden, wenn die zum zweiten Programmkanal gehörenden Programmdatenströme, die ein störungsfreies Umschalten der Darstellung vom ersten auf den zweiten Programmkanal ermöglichen, vollständig, beispielsweise in einer dem Zielteilnehmer zugeordneten Set-Top-Box, bereitstehen. Die zentrale Steuereinrichtung kann erkennen, ob die Inhalte der Programmkanäle, zwischen denen umgeschaltet werden soll, identisch, nahezu identisch oder verschieden sind und gegebenenfalls wie sich die Inhalte verändern. Auf diese Weise ist es möglich, dass ein störungsfreies Umschalten zwischen zwei Programmkanälen zu beliebigen Zeitpunkten ermöglicht wird, ohne dass hinsichtlich des neuen Zielprogrammkanals zu Beginn ein Vollbild übertragen werden muss. So können die aus dem Inhalt der Programmdatenströme gewonnenen ersten Steuerparameter darauf hinweisen, dass die dem ersten und zweiten Programmkanal zugeordneten Programmdatenströme für eine vorbestimmte Zeit identische oder im Wesentlichen identische Bildinhalte enthalten. Die zweiten Steuerparameter weisen in diesem Fall auf den Zeitbereich hin, zu dem Programmdatenströme mit identischen oder im Wesentlichen identischen Bildinhalten an der Umschalteinrichtung ankommen. Die Kodierer erzeugen unter Ansprechen auf die ersten Steuerparameter während eines vorbestimmten Zeitintervalls Programmdatenströme mit identischen oder im Wesentlichen identischen Bildinhalten, wobei die Umschalteinrichtung unter Ansprechen auf die zweiten Steuerparameter die wenigstens eine Weiterleitungseinrichtung veranlasst, eine Umschaltung vom ersten auf den zweiten Programmkanal durchzuführen, bevor sich die kodierten Programmdatenströme des ersten und zweiten Kodierers zu ändern beginnen.

Vorteilhafte Weiterbildungen sind Gegenstand der Unteransprüche.

Die Programmdatenströme können Videodaten, zum Beispiel vorab aufgezeichnete Videoprogramme oder Live-Videoprogramme enthalten. Live- Videoprogramme können beispielsweise Sportveranstaltungen sein, während vorab aufgezeichnete Videoprogramme Werbefilme darstellen können.

Um die Kodierer und die Umschalteinrichtung präziser synchronisieren zu können, werden die zweiten Steuerparameter zusammen mit einem der Programmdatenströme zur Umschalteinrichtung übertragen. In diesem Fall spricht man auch von einer Inband-Signalisierung. Auf diese Weise können die aufgrund der Latenzzeit des Verteilernetzes verursachten Verzögerungen bei der Übertragung der Steuerdaten und der Programmdatenströme vermieden werden, da die Übertragungsdauer der Steuerparameter und der Programmdatenströme korreliert ist und somit der Zeitpunkt der Umschaltung auch bei endlicher Ausbreitungsgeschwindigkeit im Verteilernetz exakt koordiniert werden kann.

Enthalten die Programmdatenströme der Programmkanäle, zwischen denen umgeschaltet werden soll, verschiedene Informationen, erzeugt der zweite Kodierer unter Ansprechen auf die ersten Steuerparameter aus den Daten des empfangenen Programmdatenstroms eine Bezugsinformation, die gefolgt von den weiteren Informationen des neuen Zielprogrammkanals zur Umschalteinrichtung übertragen werden. Die Umschalteinrichtung veranlasst unter Ansprechen auf die zweiten Steuerparameter die wenigstens eine Weiterleitungseinrichtung, eine Umschaltung vom ersten auf den zweiten Programmkanal durchzuführen.

Die ersten und zweiten Steuerparameter sind demzufolge derart miteinander korreliert, dass Kodierer und Umschalteinrichtung derart synchronisiert betrieben werden können, dass eine störungsfreie Umschaltung zwischen verschiedenen Programmkanälen möglich ist.

Gemäß einer vorteilhaften Weiterbildung können die Kodierer die zu verteilenden Programmdatenströme gemäß einem MPEG-Standard kodieren, in Datenrahmen bestimmter Länge einbetten und in das Verteilernetz einspeisen.

In diesem Fall sind die Kodierer derart ausgebildet, dass sie als Bezugsinformation Vollbilder, das heißt I-Frames gemäß einem MPEG-Standard erzeugen können.

Gemäß einer vorteilhaften Weiterbildung werden die Programmdatenströme der zentralen Steuereinrichtung zugeführt, die nunmehr in der Lage ist, aus dem in den Programmdatenströmen enthaltenen Inhalt die ersten und zweiten Steuerdaten zu gewinnen.

Dank dieses Verfahrens ist es möglich, einer Untermenge von Zielteilnehmern während einer vorbestimmten Zeitspanne einen neuen Programmkanal einzuspielen, während den übrigen Zielteilnehmern nach wie vor der ursprüngliche Programmkanal angeboten wird.

Um der Untergruppe von Zielteilnehmern wiederum den ursprünglichen Programmkanal anbieten zu können, weisen die ersten Steuerparameter darauf hin, dass sich die Bildinhalte, die in dem ersten und zweiten Programmkanal zugeordneten Programmdatenströme enthalten sind, wieder annähern. Die zweiten Steuerparameter weisen demzufolge auf den Zeitpunkt hin, zu dem die Programmdatenströme sich wieder angenähert haben. Die Kodierer erzeugen unter Ansprechen auf die ersten Steuerparameter während eines vorbestimmten Zeitintervalls Programmdatenströme mit derart angenäherten Bildinhalten, dass eine störungsfreie oder im wesentlichen störungsfreie Umschaltung auf den ersten Programmkanal möglich ist. Die Umschalteinrichtung wiederum veranlasst unter Ansprechen auf die zweiten Steuerparameter die wenigstens eine Weiterleitungseinrichtung, eine Umschaltung vom zweiten auf den ersten Programmkanal durchzuführen, sobald die in den beiden Programmdatenströmen enthaltenen Bildinhalte sich wieder derart angenähert haben, dass eine störungsfreie oder im wesentlichen störungsfreie Umschaltung auf den ersten Programmkanal möglich ist.

Das oben genannte technische Problem wird ebenfalls durch ein Datenübertragungssystem, insbesondere ein Multimedia-Datenübertragungssystem zum Übertragen von kodierten Programmdatenströmen zu einer Vielzahl von Teilnehmern gelöst. Das Datenübertragungssystem umfasst wenigstens zwei steuerbare Kodierer, wobei jeder Kodierer zum Kodieren eines Programmdatenstroms, welcher zu einem separaten Programmkanal gehört, ausgebildet ist. Ein Verteilernetz ist vorgesehen, über dass die kodierten Programmdatenströme zu einer Vielzahl von Teilnehmern übertragen werden können. Wenigstens eine steuerbare Weiterleitungseinrichtung ist vorgesehen, der wenigstens eine zentral ansteuerbare Umschalteinrichtung zugeordnet ist, um Programmdatenströme eines zentral auswählbaren Programmkanals gezielt zu wenigstens einem Teilnehmer weiterleiten zu können. Weiterhin weist das Datenübertragungssystem eine zentrale Steuereinrichtung auf, die unter Ansprechen auf ein vorbestimmtes Ereignis sowohl wenigstens einen der Kodierer als auch die Umschalteinrichtung ansteuert, derart, dass bei dem wenigstens einen der Umschalteinrichtung zugeordneten Teilnehmer eine störungsfreie Umschaltung vom aktuell wiedergegebenen Programmkanal auf einen zentral ausgewählten Programmkanal erfolgt.

Noch einmal sei betont, dass unter dem Begriff "störungsfrei" ein subjektiver Eindruck zu verstehen ist, der beim Kunden als nicht oder kaum störend wahrgenommen wird.

Um ein störungsfreies Umschalten zwischen Programmkanälen mit unterschiedlichen Inhalten zu ermöglichen, ist die zentrale Steuereinrichtung zum Erzeugen eines ersten und zweiten Steuerbefehls ausgebildet. Die Kodierer sind zum Erzeugen einer Bezugsinformation unter Ansprechen auf den ersten Steuerbefehl ausgebildet, wobei die Umschalteinrichtung unter Ansprechen auf den zweiten Steuerbefehl die ihr zugeordnete Weiterleitungseinrichtung veranlasst, vom aktuellen Programmkanal auf den vorbestimmten Programmkanal umzuschalten, so dass der vorbestimmte Programmkanal mit der Darstellung der Bezugsinformation beginnt.

Um nahtlos zwischen verschiedenen Programmkanälen umschalten zu können, ohne dass ein Störeffekt beim Teilnehmer auftritt, ist die zentrale Steuereinrichtung zum Erzeugen dritter und vierter Steuerbefehle ausgebildet, wobei die Kodierer unter Ansprechen auf den dritten Steuerbefehl während eines ersten bestimmten Zeitintervalls Programmdatenströme mit identischen oder im Wesentlichen identischen Inhalten erzeugen kann und wobei nach Ablauf des Zeitintervalls die Programmdatenströme wenigstens eines der Kodierer Zusatzdaten enthalten. Ferner veranlasst die Umschalteinrichtung unter Ansprechen auf den vierten Steuerbefehl die ihr zugeordnete Weiterleitungseinrichtung, vom aktuellen Programmkanal auf den zentral ausgewählten Programmkanal, der dem Zusatzdaten enthaltenden Programmdatenstrom zugeordnet ist, umzuschalten, solange die Programmdatenströme des ersten und zweiten Kodierers identische oder nahezu identische Inhalte enthalten.

Vorteilhafte Weiterbildungen sind Gegenstand der Unteransprüche.

Vorzugsweise handelt es sich bei der Bezugsinformation um ein Vollbild. Wird als Kodieralgorithmus ein MPEG-Standard zugrunde gelegt, wird ein Vollbild auch als I-Frame bezeichnet.

Die Umschalteinrichtung kann Bestandteil des Verteilernetzes oder mit dem Verteilernetz verbunden sein. In diesem Fall können Programmdatenströme über eine einzige Umschalteinrichtung gezielt einer Gruppe von Teilnehmern zugeführt werden.

Alternativ kann auch jedem Teilnehmer eine eigene steuerbare Umschalteinrichtung zugeordnet sein, die beispielsweise in einer sogenannten Set-Top-Box implementiert ist. Die Set-Top-Box kann auch eine Weiterleitungseinrichtung enthalten. Gemäß einer vorteilhaften Ausführungsform ist die Weiterleitungseinrichtung ein Multicast-Replikationspunkt.

Um infolge der Latenzzeit des Verteilernetzes entstehende Verzögerungen zwischen den zu übertragenden Steuerparametern und Programmdatenströmen zu reduzieren, sind die Kodierer derart ausgebildet, dass sie die für die Umschalteinrichtung bestimmten Steuerbefehle in den zu übertragenden Programmdatenstrom einfügen können. Auf diese Weise kann die Ansteuerung der Kodierer und der Umschalteinrichtung noch besser synchronisiert werden, so dass eine störungsfreie Umschaltung zwischen verschiedenen Programmkanälen gewährleistet ist.

Die Erfindung wird nachfolgend anhand eines Ausführungsbeispiels in Verbindung mit mehreren Zeichnungen erläutert. Es zeigen:
- Fig. 1: ein schematisches Blockschaltbild eines beispielhaften videobasierten Datenübertragungssystems, in welchem die Erfindung verwirklicht ist,
- Fig. 2: zwei Zeitdiagramme, welche den Speicherinhalt einer Set-Top-Box bzw. den auf einem Endgerät dargestellten Bildschirminhalt schematisch wiedergeben,
- Fig. 3: ein schematisches Blockschaltbild eines videobasierten Datenübertragungssystems zur Übertragung von Steuerparametern entsprechend einer Inband-Signalisierung, und
- Fig. 4: die zeitliche Abfolge beim Trennen und Zusammmenführen von Videoströmen unterschiedlicher Kanäle.

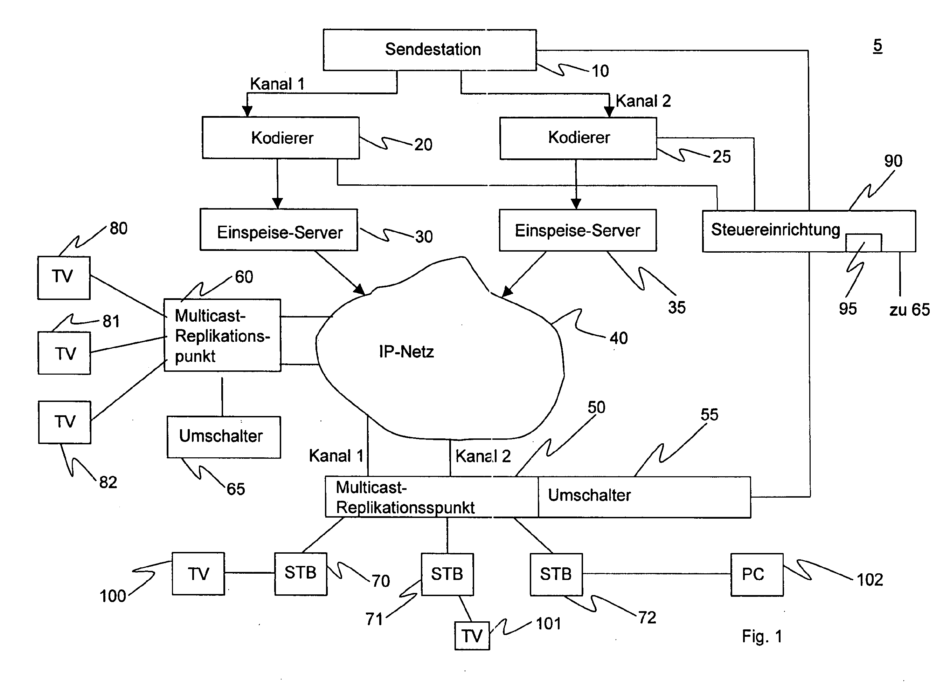

In Fig. 1 ist ein beispielhaftes videobasiertes Datenübertragungssystem 5 dargestellt. Über eine Sendestation 10 werden beispielsweise zwei Programme über entsprechende Programmkanäle übertragen. Die beiden Kanäle können über ein beliebiges drahtgebundenes oder drahtloses Netzwerk jeweils zu einem Kodierer übertragen werden. Kanal 1, der beispielsweise dem ARD-Programm entspricht, wird einem Kodierer 20 zugeführt, während Kanal 2, der einem speziellen ARD-Werbekanal entspricht, beispielsweise einem Kodierer 25 zugeführt wird. Die Kodierer 20 und 25 können derart ausgebildet sein, dass sie zu übertragende digitale Programmdatenströme gemäß einem MPEG-Standard kodieren können. Dies bedeutet, dass die Kodierer 20 und 25 die zu übertragende Programmdatenströme in sogenannte I-Frames, welche Vollbilder enthalten, B-Frames, und/oder P-Frames, welche nur Differenzbilder enthalten, kodieren können. Darüber hinaus verfügen die Kodierer 20 und 25 über eine Schnittstelle, über die sie von einer zentralen Steuereinrichtung 90 angesteuert werden können. Die Steuereinrichtung 90 ist ferner mit der Sendestation 10 verbunden, über die sie die zu übertragenden Programmdatenströme oder relevante Informationen über die zu übertragenden Programmdatenströme von der Sendestation 10 erhält. Die Steuereinrichtung 90 kann die Kodierer 20 und 25 darüber informieren, in welcher Weise sie die zu übertragenden Programmdatenströme zu kodieren haben. Der Kodierer 20 ist beispielsweise mit einem Einspeise-Server 30 verbunden, der die vom Kodierer 20 kommenden kodierten Programmdatenströme in ein Verteilernetz 40 einspeisen kann. Der Kodierer 25 ist über einen Einspeise- Server 35 mit dem Verteilernetz 40 verbunden. Der Einspeise-Server 35 speist die vom Kodierer 25 kommenden kodierten Programmdatenströme ebenfalls in das Verteilernetz 40 ein. Betont sei, dass lediglich der einfachen Darstellung wegen nur eine Sendestation und zwei Kodierer dargestellt sind. In realen videobasierten Datenübertragungssystemen wird eine Vielzahl von Programmdatenströmen über mehrere Sendestationen und eine Vielzahl von Kodierern in das Verteilernetz 40 eingespeist. Die von den Kodierern 20 und 25 erzeugten Programmdatenströme können einzeln über das Netz 40 oder aber in einem Multiplex-Signal durch das Netz übertragen werden. Ausgangsseitig sind dem Verteilernetz 40 beispielsweise zwei sogenannte Multicast-Replikationspunkte 50 und 60 zugeordnet, die die von den Kodierern 20 und/oder 25 kommenden Programmdatenströme einem einzelnen oder einer Gruppe von Teilnehmern zuführen. Im vorliegenden Beispiel sind teilnehmerseitig drei Endgeräte 100, 101 und 102 mit dem Multicast-Replikationspunkt 50 verbunden. Bei den Endgeräten 100 und 101 kann es sich um Fernsehempfänger handeln, wohingegen das Endgerät 102 ein Personalcomputer sein kann. Beispielsweise sind die Endgeräte 100, 101 und 102 über eine sogenannte Set-Top-Box 70, 71 beziehungsweise 72 mit dem Multicast-Replikationspunkt 50 verbunden. In entsprechender Weise können Endgeräte 80, 81 und 82 direkt oder ebenfalls über eine Set-Top-Box (nicht dargestellt) mit dem Multicast-Replikationspunkt 60 verbunden sein. Im vorliegenden Beispiel ist dem Multicast-Replikationspunkt 50 ein Umschalter 55, und dem Multicast-Replikationspunkt 60 ein Umschalter 65 zugeordnet. Die Set-Top-Boxen 70 bis 72 können ferner mit dem Umschalter 55 verbunden sein, wobei die Endgeräte 80 bis 82 auch mit dem Umschalter 65 verbunden sein können. Die zentrale Steuereinrichtung 90 steuert sowohl die Kodierer 20 und 25 als auch die Umschalter 55 und 60 an, und zwar derart, dass, wie nachfolgend noch näher beschrieben wird, zwischen dem Programmkanal 1 und dem Programmkanal 2 störungsfrei umgeschaltet werden kann.

Angemerkt sei an dieser Stelle, dass anstelle der dem Verteilernetz 40 zugeordneten Umschalter 55 und 65 jedem Endgerät ein Umschalter zugeordnet sein kann, die beispielsweise in den Set-Top-Boxen 70, 71 und 72 implementiert sein können. Dank der zentralen Steuereinrichtung 90 ist es möglich, den Umschaltzeitpunkt in den Umschaltern 55 und 65 derart zu wählen, dass eine Umschaltung auf einen neuen Zielkanal erfolgt, bevor die über das Netz 40 übertragene Bezugsinformationen an dem jeweiligem Multicast-Replikationspunkt 50 bzw. 60 ankommt. Auf diese Weise folgt eine präzise Synchronisation zwischen den durch die Kodierern 20 und 25 gezielt vorgenommenen Kodierungen der zu übertragenden Programmdatenströme und dem im Umschalter 55 bzw. 65 festgelegten Umschaltzeitpunkt.

Nachfolgend wird die Funktionsweise des in Fig. 1 dargestellten videobasierten Datenübertragungssystems 5 anhand zweier Ausführungsbeispiele näher erläutert.

Angenommen sei nunmehr, dass den dem Multicast-Replikationspunkt 50 zugeordneten Endgeräten 100, 101 und 102, die in diesem Fall eine Zielgruppe bilden, gemeinsam der Programmkanal 1 zugeführt werden soll. Bei einer beispielhaften Ausführungsform überträgt die Sendestation 10 die den Programmkanälen 1 und 2 zugeordneten Videosignale in analoger Form zum Kodierer 20 beziehungsweise zum Kodierer 25. Die Kodierer 20 und 25 setzen die analogen Videosignale in entsprechende digitale Programmdaten um und komprimieren die Daten beispielsweise gemäß dem MPEG-4-Standard.

Die digitalen Programmdaten werden in an sich bekannter Weise in sogenannte I-Frames, B-Frames und P-Frames kodiert, wobei in der Regel alle zwei bis vier Sekunden ein sogenannter I-Frame, das heißt ein Vollbild des zu übertragenden Programms erzeugt wird. In üblicher Weise werden die Videodaten und/oder Audiodaten enthaltenen Programmdatenströme in MPEG-Container eingebettet und über die Einspeise-Server 30 und 35 in das Verteilernetz 40 eingespeist. Bei dem hier angenommenen Multicast-Betrieb enthalten die MPEG-Container zusätzlich die Zieladressen der Endgeräte 100, 101 und 102 oder der Set-Top-Boxen 70, 71 und 72. Die sowohl zum Programmkanal 1 als auch zum Programmkanal 2 gehörenden Programmdatenströme werden über das Netz 40 zu den Multicast-Replikationspunkten 50 und 60 übertragen. Der Umschalter 55 ist derart programmiert, dass er zunächst den Multicast-Replikationspunkt 50 veranlasst, nur die zum Programmkanal 1 gehörenden Programmdatenströme zu den Endgeräten 100, 101 und 102 weiterzuleiten. Die Programmdateströme werden dort visuell und/oder akustisch wiedergegeben. Ferner sei angenommen, dass die zu den Programmkanälen 1 und 2 gehörenden Programmdatenströme zum Multicast-Replikationspunkt 60 übertragen werden. Am Multicast-Replikationspunkt 60 sorgt der Umschalter 65 zunächst dafür, dass nur die Programmdatenströme des Programmkanals 1 an die angeschlossenen Endgeräte 80 bis 82 weitergeleitet und dort wiedergegeben werden.

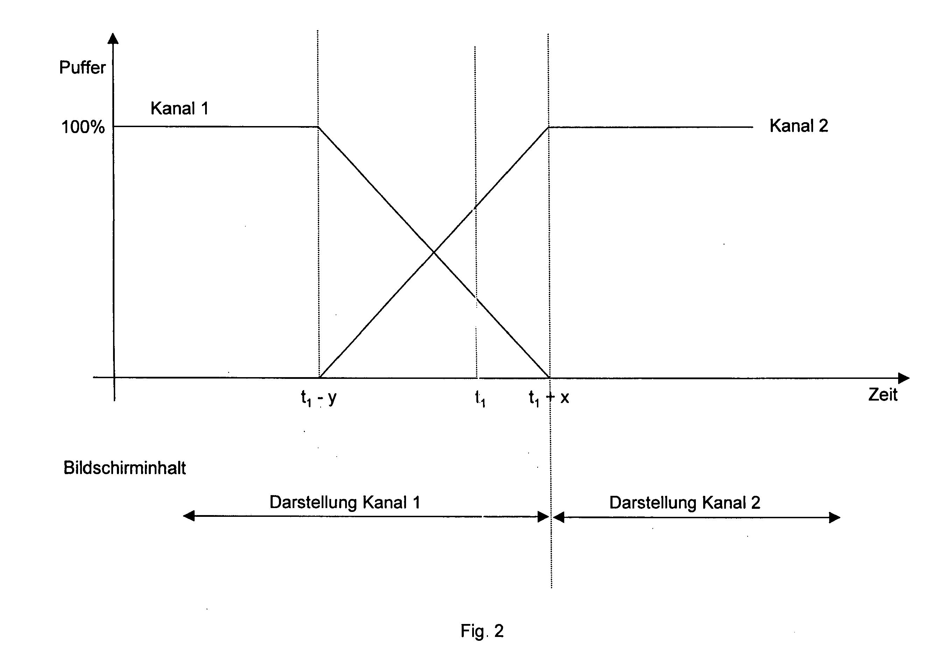

Die Steuereinrichtung 90 weist einen Speicher 95 auf, in dem teilnehmerindividuelle Informationen, zum Beispiel Kundenprofile oder anderweitige von der Set-Top-Box bzw. Umschalteinrichtung auswertbare Unterscheidungskriterien hinterlegt sein können. Diese Informationen werden von der Steuereinrichtung 90 verwendet, um zentral für einen bestimmten Teilnehmer oder eine bestimmte Gruppe von Teilnehmern eine gezielte Umschaltung zwischen Programmkanälen durchzuführen. So können die im Speicher 95 für die Kunden der Endgeräte 100, 101 und 102 hinterlegten Profildaten darauf hinweisen, dass die Nutzer dieser Endgeräte mit Vorliebe Skifahren gehen. Darüber hinaus kann der Steuereinrichtung 90 beispielsweise über die Sendestation 10 der Programmkanal, zum Beispiel Kanal 2, und die Zeit mitgeteilt worden sein, zu der ein Werbespot über das Skifahren im Programmkanal 2 übertragen wird. Unter Ansprechen auf das vorbestimmte Ereignis, dass nunmehr in Kürze über den Programmkanal 2 ein Ski-Werbespot übertragen wird, überträgt die Steuereinrichtung 90 einen Steuerbefehl zum Kodierer 25. Unter Ansprechen auf diesen Steuerbefehl erzeugt der Kodierer 25 ein I-Frame des Programmdatenstroms, der den Werbespot enthält. Die Steuereinrichtung 90 sendet ferner einen weiteren Steuerbefehl zum Umschalter 55. Dieser Steuerbefehl kann in einem MPEG-Container, der Programmdatenströme des aktuellen Programms enthält, zur Umschalteinrichtung 50 übertragen werden. Der Umschalter 55 ist derart ausgebildet, dass er die in den empfangenen MPEG-Container enthaltenen Informationen auslesen und auswerten kann. Erkennt der Umschalter 55 anhand der im MPEG-Container enthaltenen Steuerinformation, dass in Kürze ein I-Frame des Programmkanals 2 übertragen wird, veranlasst er den Multicast-Replikationspunkt 50, dass nunmehr die dem Programmkanal 2 zugeordneten Programmdatenströme, welche den Werbespot über das Skifahren enthalten, zu den Set-Top-Boxen 70, 71, 72 übertragen werden. Die Darstellung des Werbespots selbst wird mit dem empfangenen Vollbild des Progammkanals 2 auf den Endgeräten 100, 101 und 102 beginnen, wie dies in der unteren Darstellung der Fig. 2 gezeigt ist. Da entsprechende Einträge über die Teilnehmer 80, 81 und 82, welche dem Multicast-Replikationspunkt 60 zugeordnet sind, nicht in der Steuereinrichtung 90 hinterlegt sind, wird nach wie vor der Programmdatenstrom des Programmkanals 1 zu den Endgeräten 80, 81 und 82 übertragen.

Dank dieses Verfahrens ist sichergestellt, dass eine störungsfreie Umschaltung vom Programmkanal 1 auf Programmkanal 2 möglich ist, ohne dass auf den Endgeräten 100, 101 und 102 störende Bildeffekte wahrgenommen werden. Denn nach dem durch die Steuereinrichtung 90 zentral eingeleiteten Programmwechsel wird an den Endgeräten 100, 101 und 102 die Wiedergabe des Werbespots mit einem Vollbild beginnen.

In Fig. 2 ist schematisch ein Zeitdiagramm über den Umschaltvorgang dargestellt, wobei in der oberen Darstellung die in den Speichern (nicht dargestellt) der jeweiligen Set-Top-Boxen 70 bis 72 hinterlegten Programmdaten über der Zeit dargestellt sind. Solange auf den Endgeräten 100, 101 und 102 die Information des Programmkanals 1 dargestellt werden soll, sind werden die Speicher über den Multicast-Replikationspunkt 50 vollständig mit Programmdaten des Programmkanals 1 gefüllt. Über den von der Steuereinrichtung 90 empfangenen Steuerbefehl weiß der Umschalter 55, dass zum Zeitpunkt tly eine Umschaltung auf den zweiten Programmkanal erfolgen soll; denn ab dem Zeitpunkt t1 soll ein Werbespot über Skifahren übertragen werden. Ab dem Zeitpunkt t1-y werden keine Programmdatenströme des Programmkanals 1 mehr vom Multicast-Replikationspunkt 50 übertragen. Demzufolge werden dann keine Programmdaten des Programmkanals 1 mehr in die Speicher der Step-Top-Boxen 70 bis 72 geschrieben. Programmdaten des Programmkanals 1 werden vom Zeitpunkt t1-y bis zum Wiedergabezeitpunkt t₁+x an die Endgeräte 100, 101 und 102 nur noch aus den Speichern der Set-Top-Boxen 70 bis 72 übertragen. Ab dem Zeitpunkt t1-y werden die zum Programmkanal 2 gehörenden Programmdaten in die Speicher der Set-Top-Boxen 70 bis 72 eingeschrieben. Zum Zeitpunkt tl wird das gezielt im Kodierer 25 erzeugte Vollbild über den Multicast-Replikationspunkt 50 in die Speicher der Set-Top-Boxen 70 bis 72 geschrieben. Da nunmehr ein Vollbild in den Speichern der Set-Top-Boxen 70 bis 72 hinterlegt ist, findet zum Wiedergabezeitpunkt t₁+x eine störungsfreie Darstellung des Programminhaltes des Programmkanals 2 auf den Endgeräten 100 bis 102 statt. Dieser Sachverhalt ist in der unteren Darstellung der Fig. 2 gezeigt. Zum Zeitpunkt t1+X befinden sich keine Daten des Programmkanals 1 mehr in den Speichern. Statt dessen sind die Speicher nur noch mit Programmdaten des Programmkanals 2 gefüllt, wie in der oberen Darstellung der Fig. 2 gezeigt ist. Der in der oberen Darstellung der Fig. 2 gezeigte Umschaltvorgang berücksichtigt die Latenzzeit des Netzes 40, so dass eine Umschaltung vom Programmkanal 1 auf den neuen Zielkanal 2 erst dann erfolgt, wenn die vom Kodierer 20 oder vom Kodierer 25 kodierten Programmdatenströme auch wirklich in den Speichern der Set-Top-Boxen 70 bis 72 gespeichert sind.

Die Steuereinrichtung 90 kann zum Beispiel vom Betreiber der Sendestation 10 auch über die Zeit informiert werden, zu der der Werbespot des Programmkanals 2 zu Ende geht. Um ein erneutes störungsfreies Umschalten auf den ursprünglichen Programmkanal 1 zu ermöglichen, wird ein Steuerbefehl von der Steuereinrichtung 90 zum Kodierer 20 übertragen, der dafür sorgt, dass der Kodierer 20 zu einem vorbestimmten Zeitpunkt wieder ein Vollbild erzeugt. Gleichzeitig empfängt der Umschalter 55 einen Steuerbefehl von der Steuereinrichtung 90, der signalisiert, wann die Umschaltung auf den ursprünglichen Programmkanal 1 erfolgen soll. Die Synchronisation zwischen Kodierer 20 und Umschalter 55 sorgt dafür, dass, sobald der Werbespot auf dem Programmkanal 2 zu Ende geht, der Multicast-Replikationspunkt 50 veranlasst wird, zum Zeitpunkt t₁-y Programmdatenströme des ersten Programmkanals passieren zu lassen, so dass rechtzeitig, d. h. zum Zeitpunkt t₁, in den Speichern der Set-Top-Boxen 70 bis 72 jeweils ein Vollbild des Programmkanals 1 vorliegt, das dann nach dem Ende des Werbespots zum Zeitpunkt t₁+x zu den Endgeräten 100, 101 und 102 übertragen werden kann, wie dies in Fig. 2 gezeigt ist. Damit ist sichergestellt, dass am Ende des im Programmkanal 2 übertragenen Werbespots ein störungsfreies Umschalten auf den ursprünglichen Programmkanal 1 stattfindet. Angemerkt sei noch, dass auch während der Umschaltprozeduren die von den Kodierern 20 und 25 erzeugten Programmdatenströme der jeweiligen Programmkanäle 1 und 2 über das Netz 40 zum Multicast-Replikationspunkt 50 übertragen werden. Weiterhin sei angemerkt, dass der Multicast-Replikationspunkt 50 unter anderem die Aufgabe hat, die zum Programmkanal 1 gehörenden Programmdatenströme zu kopieren und auf die Set-Top-Boxen 70, 71 und 72 zu verteilen.

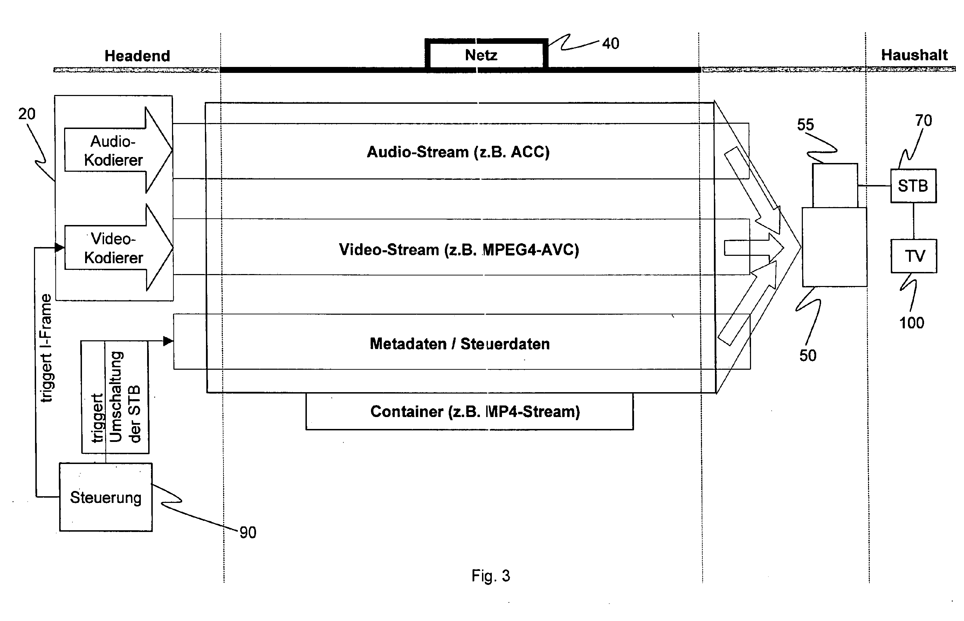

Fig. 3 zeigt ein Beispiel, wie Steuerparameter als Metadaten von der Steuereinrichtung 90 mittels einer sogenannten Inband-Signalisierung zum Umschalter 55 übertragen werden können. Fig. 3 entspricht einer vereinfachten Darstellung des in Fig. 1 gezeigten Datenübertragungssystems. Das Datenübertragungssystem ist in drei Abschnitte eingeteilt. Der erste Abschnitt bildet eine Kopfstelle, auch Headend genannt, die den Kodierer 20 und die Steuereinrichtung 90 enthalten kann. Der Kodierer 20 weist beispielsweise einen Audio- und einen Video-Kodierer auf, die die zum Programmkanal 1 gehörenden Audio- und Videodaten beispielsweise gemäß dem MPEG4-Standard kodieren und in einen oder mehrere MPEG-Container einfügen. Die Kopfstelle ist dem Netz 40 zugeordnet, welchem im vorliegenden Beispiel auch der Umschalter 55 zugerechnet werden kann. Der Umschalter 55 ist, wie auch in Fig. 1 gezeigt, bei dieser Ausführungsform dem Multicast-Replikationspunkt 50 zugeordnet. Der dritte Abschnitt, der mit Haushalt bezeichnet ist, umfasst unter anderem die Set-Top-Boxen 70 bis 72 sowie die Endgeräte 100, 101 und 102. Lediglich der einfachen Darstellung wegen ist nur die Set-Top-Box 70 und das damit verbundene Endgerät 100 in Fig. 3 gezeigt. Die Steuereinrichtung 90 sendet Steuerdaten sowohl zum Kodierer 20 als auch zum Umschalter 55. Die für den Umschalter 55 bestimmten Steuerdaten können vom Kodierer 20 in den dargestellten MPEG-Container eingebettet werden. Die Steuerdaten können hierzu in einem Bereich gespeichert werden, der standardgemäß zur Übertragung von Metadaten vorgesehen ist. Auf diese Weise können die für den Umschalter 55 bestimmten Steuerdaten zusammen mit den Videodaten und/oder Audiodaten, die für ein störungsfreies Umschalten benötigt werden, in einem gemeinsamen Datencontainer zum Multicast-Reblikationspunkt 50 bzw. zum Umschalter 55 übertragen werden.

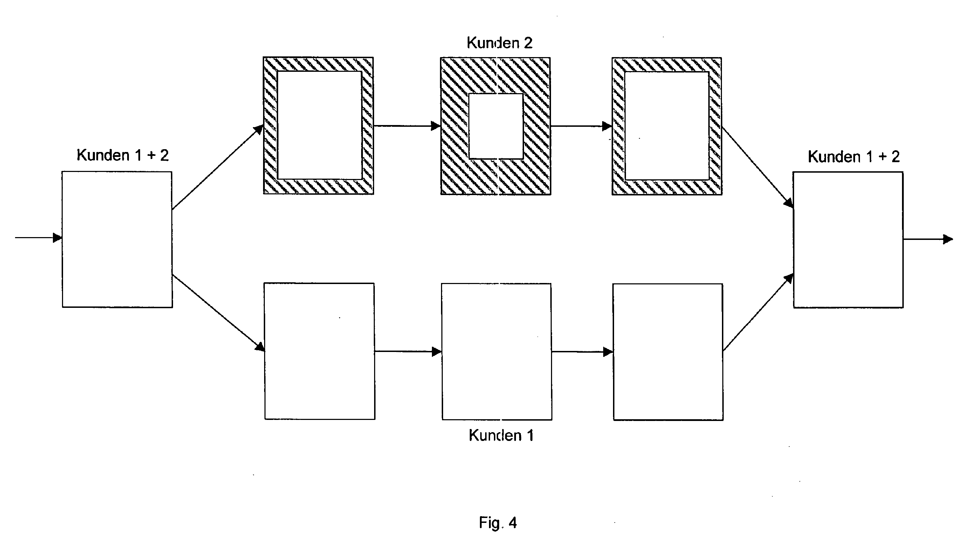

Nachfolgend wird in Verbindung mit Fig. 4 ein zweites Szenario beschrieben, bei dem eine störungsfreie Umschaltung zwischen unterschiedlichen Programmkanälen erfolgen soll. Das folgende Beispiel betrifft den Fall, dass an den Endgeräten 80, 81, 82 sowie 100, 101 und 102 derselbe Spielfilm wiedergegeben werden soll. Ab einem bestimmten Zeitpunkt soll jedoch beispielsweise an den Endgeräten 100, 101 und 102 ein Werberahmen in den Spielfilm eingeblendet werden, während der Spielfilm für die anderen Zuschauer an den Endgeräte 80, 81 und 82 weiter läuft.

Angenommen sei beispielsweise, dass über den Programmkanal 1 und den Programmkanal 2 zur selben Zeit der gleiche Spielfilm übertragen wird. Solange dies der Fall ist, genügt es, lediglich einen der beiden Programmkanäle, beispielsweise den Programmkanal 1 über das Netz 40 zu den Multicast-Replikationspunkten 60 und 50 zu übertragen, die dann die Programmdaten vervielfältigen und zu den Endgeräten 80 bis 82 bzw. 100 bis 102 weiterleiten. Ferner sei angenommen, dass die Steuereinrichtung 90 über die Sendestation 10 beziehungsweise den Produzenten darüber informiert worden ist, dass in den Spielfilm, der den Kunden der Endgeräte 100, 101 und 102 gezeigt wird, ein Werberahmen zugeführt werden soll. Der Zeitpunkt, zu dem ein Werberahmen eingeblendet werden soll, ist der Steuereinrichtung bekannt. Weiterhin ist der Steuereinrichtung 90 bekannt, dass der Werberahmen in den über den Programmkanal 2 übertragenen Spielfilm eingeblendet werden soll. Die Steuereinrichtung 90 sendet daraufhin zum vorgegebenen Zeitpunkt einen Steuerbefehl sowohl zum Kodierer 20 als auch zum Kodierer 25, der die Kodierer 20 und 25 veranlasst, jeweils ein identisches Bild aus den empfangenen Programmdatenströmen zu erzeugen, bevor über den Programmkanal 2 der Spielfilm mit einem eingeblendeten Werberahmen übertragen wird. Die Kodierer 20 und 25 oder die Einspeise-Server 30 und 35 können derart ausgebildet sein, dass sie zu einem vorbestimmten Zeitpunkt vor dem eigentlichen Umschalten beide Programmkanäle über das Verteilernetz 40 zu den Multicast-Replikationspunkten 50 und 60 übertragen.

Zudem wird ein Steuerbefehl zum Umschalter 55 übertragen, der den Multicast-Replikationspunkt 50 veranlasst, die zum Programmkanal 2 gehörenden Programmdatenströme zu den Endgeräten 100, 101 und 102 weiterzuleiten, ohne dass ein störender Umschalteffekt auf den Endgeräten sichtbar wird. Die Steuereinrichtung 90 koordiniert die Kodierer 20 und 25 sowie den Umschalter 55 derart, dass eine Umschaltung vom ersten Programmkanal auf den zweiten Programmkanal im Multicast-Replikationspunkt 50 erfolgt, solange beide Kanäle noch ein identisches oder ein nahezu identisches Bild übertragen. Anschließend wird in der Sendestation 10, beispielsweise kontinuierlich, in den über den Programmkanal 2 übertragenen Spielfilm ein immer größer werdender Werberahmen eingeblendet. Da im Umschaltzeitpunkt die Programme aller Programmkanäle identisch oder nahezu identisch waren, genügt es, auch im Umschaltzeitpunkt anstelle eines Vollbildes lediglich die Differenzinformation der darzustellenden Bilder des Programmkanals 2 zu übertragen. Eine Vollbildübertragung, die ein nahtloses Umschalten zwischen den Programmkanälen ermöglicht, ist in diesem Fall nicht erforderlich. Da die Steuereinrichtung 90 über den weiteren Verlauf der über die Programmkanäle 1 und 2 übertragenen Programmdaten informiert ist, weiß die Steuereinrichtung 90, zu welchem Zeitpunkt der Werberahmen aus dem über den Programmkanal 2 übertragenen Programm wieder ausgeblendet wird. Die Steuereinrichtung 90 sendet dann jeweils einen weiteren Steuerbefehl zu den beiden Kodierern 20 und 25, die die Kodierer 20 und 25 veranlassen, zu einem vorgegebenen Zeitpunkt ein identisches oder nahezu identisches Bild hinsichtlich der beiden Programmkanäle zu erzeugen. Die entsprechend kodierten Programmdatenströme werden wiederum über die Einspeise-Server 30 und 35 und das Verteilernetz 40 zum Multicast-Replikationspunkt 60 und zum Multicast-Replikationspunkt 50 übertragen. Ferner wird ein Steuerbefehl zum Umschalter 55 übertragen, der dem Multicast-Replikationspunkt 50 anzeigt, zu welchem Zeitpunkt die den Programmkanälen 1 und 2 zugeordneten Programmdatenströme identisch oder nahezu identisch sind. Der Umschalter 55 und/oder der Multicast-Replikationspunkt 50 ist derart ausgebildet, dass er aus den empfangenen Programmdatenströmen, die zu den Programmkanälen 1 und 2 gehören, erkennen kann, wann identische oder nahezu identische Bilder auf beiden Programmkanälen vorliegen. Sobald die entsprechend kodierten Programmdatenströme in den Speichern der Set-Top-Boxen 70 bis 72 vorliegen, werden die Programmdatenströme zu den Endgeräten 100 bis 102 übertragen. Dadurch erfolgt eine Umschaltung vom Programmkanal 2 auf den Programmkanal 1 in der Weise, dass keine sichtbare Störung auf den Endgeräten 100, 101 und 102 feststellbar ist. Eine Vollbildübertragung, die ein nahtloses Umschalten zwischen den Programmkanälen ermöglicht, ist in diesem Fall nicht erforderlich. Das entsprechende Verfahren ist schematisch in Fig. 4 dargestellt, welches das gezielte Einmischen von Werbung für eine bestimmte Gruppe von Teilnehmern darstellt.

## Patentansprüche

1. Verfahren zum störungsfreien, zentral gesteuerten Umschalten von einem ersten Programmkanal auf einen zweiten Programmkanal in einem Datenübertragungssystem (5) zum Verteilen von kodierten Programmdatenströmen auf mehrere Teilnehmer, mit folgenden Schritten:
Zuführen von wenigstens zwei Programmdatenströmen, die jeweils einem separaten Programmkanal zugeordnet sind, zu jeweils einem steuerbaren Kodierer (20, 25);
Kodieren der dem ersten Programmkanal zugeordneten Programmdatenströme im ersten Kodierer (20) und Kodieren der dem zweiten Programmkanal zugeordneten Programmdatenströme im zweiten Kodierer (25);
Einspeisen der kodierten Ströme in ein Verteilernetz (40);
Zuführen des dem ersten Programmkanal zugeordneten Programmdatenstroms über wenigstens eine Weiterleitungseinrichtung (50, 60) zu wenigstens einem Zielteilnehmer ( 80 bis 82; 100 bis 101), bei dem der Programmdatenstrom wiedergegeben wird;
Bereitstellen von ersten und zweiten Steuerparametern in einer zentralen Steuereinrichtung (90), die ein synchronisiertes Aktivieren der Kodierer (20, 25) und wenigstens einer Umschalteinrichtung (90) zum störungsfreien Umschalten der Programmkanäle ermöglicht;
Ausführen eines störungsfreien Umschaltens vom ersten auf den zweiten Programmkanal, mit folgenden Schritten:
Übertragen der ersten Steuerparameter wenigstens zum zweiten Kodierer (25), der unter Ansprechen auf die ersten Steuerparameter den dem zweiten Programmkanal zugeordneten Programmdatenstrom in einer vorbestimmten Weise kodiert;
Übertragen der zweiten Steuerparameter (90) zu der wenigstens einen Umschalteinrichtung (55), die unter Ansprechen auf die zweiten Steuerparameter die wenigstens eine Weiterleitungseinrichtung (50) veranlasst, die dem zweiten Programmkanal zugeordneten Programmdatenströme zu dem wenigstens einen Zielteilnehmer (100 bis 102) zu einem Zeitpunkt zuzuführen, zu dem ein störungsfreies Umschalten gewährleistet ist, wobei
die ersten Steuerparameter darauf hinweisen, dass die dem ersten und zweiten Programmkanal zugeordneten Programmdatenströme für eine vorbestimmte Zeit identische oder im wesentlichen identische Bildinhalte enthalten, und die zweiten Steuerparameter darauf hinweisen, wann Programmdatenströme mit identischen oder im wesentlichen identischen Bildinhalten ankommen, wobei
die Kodierer (20, 25) unter Ansprechen auf die ersten Steuerparameter während eines vorbestimmten Zeitintervalls Programmdatenströme mit identischen oder im wesentlichen identischen Bildinhalten erzeugen, und wobei
die Umschalteinrichtung (55, 65) unter Ansprechen auf die zweiten Steuerparameter die wenigstens eine Weiterleitungseinrichtung (50, 60) veranlasst, eine Umschaltung vom ersten auf den zweiten Programmkanal durchzuführen, bevor sich die kodierten Programmdatenströme des ersten und zweiten Kodierers zu ändern beginnen.

2. Verfahren nach Anspruch 1,
**dadurch gekennzeichnet, dass**
die Programmdatenströme aufgezeichnete Video-Programme oder Live-Video-Programme enthalten.

3. Verfahren nach Anspruch 1 oder 2,
**dadurch gekennzeichnet, dass**
die zweiten Steuerparameter zusammen mit einem der Programmdatenströmen zur Umschalteinrichtung (55; 65) übertragen werden.

4. Verfahren nach einem der Ansprüche 1 bis 3,
**dadurch gekennzeichnet, dass**
der zweite Kodierer (25) unter Ansprechen auf die ersten Steuerparameter aus den Daten des empfangenen Programmdatenstroms eine Bezugsinformation erzeugt und zur Umschalteinrichtung (55; 65) überträgt; und dass die Umschalteinrichtung (55; 65) unter Ansprechen auf die zweiten Steuerparameter die wenigstens eine Weiterleitungseinrichtung (50, 60) veranlasst, eine Umschaltung vom ersten auf den zweiten Programmkanal durchzuführen.

5. Verfahren nach Anspruch 4,
**dadurch gekennzeichnet, dass**
die Kodierer die zu verteilenden Programmdatenströme gemäß dem MPEG-Standard kodieren und in Rahmen bestimmter Länge in das Verteilernetz einspeisen und dass die Bezugsinformation ein I-Frame ist.

6. Verfahren nach einem der Ansprüche 1 bis 5,
**dadurch gekennzeichnet, dass**
die ersten und zweiten Steuerdaten aus dem in den Programmdatenströmen enthaltenen Inhalt gewonnen werden.

7. Verfahren nach Anspruch 1,
**dadurch gekennzeichnet, dass**
die ersten Steuerparameter darauf hinweisen, dass sich die Bildinhalte, die in den dem ersten und zweiten Programmkanal zugeordneten Programmdatenströme enthalten sind, wieder annähern, dass die zweiten Steuerparameter darauf hinweisen, wann die Bildinhalte der Programmdatenströme sich wieder angenähert haben, dass
die Kodierer (20, 25) unter Ansprechen auf die ersten Steuerparameter während eines vorbestimmten Zeitintervalls Programmdatenströme mit derart angenäherten Bildinhalten erzeugen, dass eine störungsfreie Umschaltung auf den ersten Programmkanal möglich ist, und dass
die Umschalteinrichtung (55, 65) unter Ansprechen auf die zweiten Steuerparameter die wenigstens eine Weiterleitungseinrichtung (50, 60) veranlasst, eine Umschaltung vom zweiten auf den ersten Programmkanal durchzuführen, sobald die in den beiden Programmdatenströme enthaltenen Bildinhalte sich derart angenähert haben, dass eine störungsfreie Umschaltung auf den ersten Programmkanal möglich ist.

8. Datenübertragungssystem (5) zum Übertragen von mehreren kodierten Programmdatenströmen zu einer Vielzahl von Teilnehmern, umfassend wenigstens zwei steuerbare Kodierer (20, 25), wobei jeder Kodierer (20, 25) zum Kodieren eines Programmdatenstroms, welcher zu einem separaten Programmkanal gehört, ausgebildet ist,
ein Verteilernetz (40) zum Verteilen der kodierten Programmdatenströme auf eine Vielzahl von Teilnehmern (80 bis 82; 100 bis 102),
wenigstens eine steuerbare Weiterleitungseinrichtung (50, 60), der wenigstens eine zentral ansteuerbare Umschalteinrichtung (55, 65) zur gezielten Weiterleitung von Programmdatenströmen eines zentral auswählbaren Programmkanals zu wenigstens einem Teilnehmer zugeordnet ist, und
eine zentrale Steuereinrichtung (90), die unter Ansprechen auf ein vorbestimmtes Ereignis sowohl wenigstens einen der Kodierer (20, 25) als auch die Umschalteinrichtung (55, 65) ansteuert, derart, dass bei dem wenigstens einen der Umschalteinrichtung (55, 65) zugeordneten Teilnehmer eine störungsfreie Umschaltung vom aktuell wiedergegebenen Programmkanal auf einen zentral ausgewählten Programmkanal erfolgt, wobeidie zentrale Steuereinrichtung (90) zum Erzeugen eines ersten und zweiten Steuerbefehls ausgebildet ist, dass die Kodierer (20, 25) zum Erzeugen einer Bezugsinformation unter Ansprechen auf den ersten Steuerbefehl ausgebildet sind, und dass die Umschalteinrichtung (55, 65) unter Ansprechen auf den zweiten Steuerbefehl die ihr zugeordnete Weiterleitungseinrichtung (50, 60) veranlasst, vom aktuellen Programmkanal auf den vorbestimmten Programmkanal umzuschalten, so dass der vorbestimmte Programmkanal mit der Darstellung der Bezugsinformation beginnt, wobei
die zentrale Steuereinrichtung (90) ferner zum Erzeugen dritter und vierter Steuerbefehle ausgebildet ist, wobei die Kodierer (20, 25) unter Ansprechen auf den dritten Steuerbefehl während eines bestimmten Zeitintervalls Programmdatenströme mit identischen oder im wesentlichen identischen Bildinhalten erzeugen und nach Ablauf des Zeitintervalls die Programmdatenströme wenigstens eines der Kodierer (20, 25) Zusatzdaten enthalten, und wobei
die Umschalteinrichtung (55, 65) unter Ansprechen auf den vierten Steuerbefehl die ihr zugeordnete Weiterleitungseinrichtung (50, 60) veranlasst, vom aktuellen Programmkanal auf den zentral ausgewählten Programmkanal, der den Zusatzdaten enthaltenen Programmdatenstrom zugeordnet ist, umzuschalten, solange die Programmdatenströme des ersten und zweiten Kodierers (20, 25) identische oder nahezu identische Bildinhalte enthalten.

9. Datenübertragungssystem nach Anspruch 8,
**dadurch gekennzeichnet, dass**
die Bezugsinformation ein I-Frame ist.

10. Datenübertragungssystem, nach Anspruch 8 oder 9,
**dadurch gekennzeichnet, dass**
wenigstens einem Teilnehmer eine steuerbare Umschalteinrichtung zugeordnet ist.

11. Datenübertragungseinrichtung nach einem der Ansprüche 8 bis 10,
**dadurch gekennzeichnet, dass**
die Kodierer (20, 25) derart ausgebildet sind, dass sie die für die Umschalteinrichtung bestimmten Steuerbefehle in den zu übertragenden Programmdatenstrom einfügen können.

12. Datenübertragungseinrichtung nach einem der Ansprüche 8 bis 11,
**dadurch gekennzeichnet, dass**
die wenigstens eine Weiterleitungseinrichtung (50, 60) ein Multicast-Replikationspunkt.

13. Datenübertragungseinrichtung nach einem der Ansprüche 8 bis 12,
**dadurch gekennzeichnet, dass**
jedem Teilnehmer eine Weiterleitungseinrichtung und Umschalteinrichtung zugeordnet ist.

## Claims

1. A method for centrally controlled switching, without interference, from a first program channel to a second program channel in a data transfer system (5) for distributing encoded program data streams to a plurality of subscribers, comprising the steps of:
supplying at least two program data streams, each one associated with a separate program channel, to a respective controllable encoder (20, 25);
encoding the program data streams associated with the first program channel in the first encoder (20) and encoding the program data streams associated with the second program channel in the second encoder (25);
feeding the encoded data streams into a distribution network (40); supplying the program data stream associated with the first program channel via at least one forwarding means (50, 60) to at least one destination subscriber (80 to 82; 100 to 101), where the program data stream is reproduced;
providing, in a central control device (90), first and second control parameters which allow for synchronized activation of the encoders (20, 25) and of at least one switching means (90) for switching between the program channels without interference;
performing a switchover from the first to the second program channel without interference, comprising the steps of:
transferring the first control parameters at least to the second encoder (25) which is responsive to the first control parameters to encode the program data stream associated with the second program channel in a predetermined manner;
transferring the second control parameters (90) to the at least one switching means (55) which is responsive to the second control parameters to cause the at least one forwarding means (50) to supply the program data streams associated with the second program channel to the at least one destination subscriber (100 to 102) at a time at which a switchover without interference is guaranteed; wherein
the first control parameters indicate that the program data streams associated with the first and second program channels contain identical or substantially identical image contents during a predetermined time interval, and the second control parameters indicate when program data streams with identical or substantially identical image contents arrive; wherein
the encoders (20, 25) are responsive to the first control parameters to generate program data streams with identical or substantially identical image contents during a predetermined time interval; and wherein
the switching means (55, 65) is responsive to the second control parameters to cause the at least one forwarding means (50, 60) to perform a switchover from the first to the second program channel, before the encoded program data streams of the first and second encoders start to change.

2. The method according to claim 1, **characterized in that** the program data streams include recorded video programs or live video programs.

3. The method according to claim 1 or 2, **characterized in that** the second control parameters are transferred to the switching means (55; 65) together with one of said program data streams.

4. The method according to any of claims 1 to 3,
**characterized in that** the second encoder (25) is responsive to the first control parameters to generate a reference information from the data of the received program data stream and to transfer it to the switching means (55; 65); and that
the switching means (55; 65) is responsive to the second control parameters to cause the at least one forwarding means (50, 60) to perform a switchover from the first to the second program channel.

5. The method according to claim 4, **characterized in that** the encoders encode the program data streams to be distributed according to the MPEG standard to feed them into the distribution system in frames of predetermined length, and that the reference information is an I-frame.

6. The method according to any of claims 1 to 5,
**characterized in that** the first and second control data are derived from the content included in the program data streams.

7. The method according to claim 1, **characterized in that** the first control parameters indicate that the image contents included in the program data streams associated with the first and second program channels re-converge; that
the second control parameters indicate when the image contents of the program data streams have been re-converged; that
the encoders (20, 25) are responsive to the first control parameters to generate, during a predetermined time interval, program data streams with such re-converged image content that a switchover without interference to the first program channel is possible; and that
the switching means (55, 65) is responsive to the second control parameters to cause the at least one forwarding means (50, 60) to perform a switchover from the second to the first program channel once the image contents included in the two program data streams have converged to such an extent that a switchover to the first program channel is possible without interference.

8. A data transfer system (5) for transferring a plurality of encoded program data streams to a multitude of subscribers, comprising
at least two controllable encoders (20, 25), each encoder (20, 25) being adapted for encoding a program data stream which is associated with a separate program channel;
a distribution network (40) for distributing the encoded program data streams to a multitude of subscribers (80 to 82; 100 to 102);
at least one controllable forwarding means (50, 60) which has associated therewith at least one centrally controllable switching means (55, 65) for selectively forwarding program data streams of a centrally selectable program channel to at least one subscriber; and
a central control device (90) which is responsive to a predetermined event to control at least one of the encoders (20, 25) as well as the switching means (55, 65) such that a switchover without interference from the program channel currently being reproduced to a centrally selected program channel is performed at the at least one subscriber associated with the switching means (55, 65);
wherein the central control device (90) is adapted to generate a first and a second control command, the encoders (20, 25) are adapted to generate a reference information in response to the first control command, and that the switching means (55, 65) is responsive to the second control command to cause the forwarding means (50, 60) to which it is associated to switch from the current program channel to the predetermined program channel, so that the predetermined program channel starts with the representation of the reference information; wherein
the central control device (90) is further adapted to generate third and fourth control commands, wherein the encoders (20, 25) are responsive to the third control command to generate program data streams with identical or substantially identical image contents during a predetermined time interval, and wherein once the time interval has elapsed the program data streams of at least one of the encoders (20, 25) include additional data; and wherein
the switching means (55, 65) is responsive to the fourth control command to cause the forwarding means (50, 60) to which it is associated to switch from the current program channel to the centrally selected program channel which is associated with the program data stream including the additional data, as long as the program data streams of the first and the second encoder (20, 25) include identical or nearly identical image contents.

9. The data transfer system according to claim 8, **characterized in that** the reference information is an I-frame.

10. The data transfer system according to claim 8 or 9, **characterized in that** at least one subscriber has associated therewith a controllable switching means.

11. The data transfer system according to any of claims 8 to 10, **characterized in that** the encoders (20, 25) are configured to be capable to insert the control commands destined for the switching means into the program data stream to be transferred.

12. The data transfer system according to any of claims 8 to 11, **characterized in that** the at least one forwarding means (50, 60) is a multicast replication point.

13. The data transfer system according to any of claims 8 to 12, **characterized in that** each subscriber has associated therewith a forwarding means and a switching means.

## Revendications

1. Procédé de commutation sans perturbations, commandé de manière centralisée d'un premier canal de programme vers un deuxième canal de programme dans un système de transmission de données (5) pour la distribution de flux de données de programme codés à plusieurs participants, avec les étapes suivantes :
introduction d'au moins deux flux de données, qui correspondent chacun à un canal de programme séparé, chacun dans un codeur contrôlable (20, 25) ;
codage des flux de données de programme correspondant au premier canal de programme dans le premier codeur (20) et codage des flux de données de programme correspondant au deuxième canal de programme dans le deuxième codeur (25) ;
introduction des flux codés dans un réseau distributeur (40) ;
introduction du flux de données de programme correspondant au premier canal de programme par l'intermédiaire d'au moins un dispositif de transmission (50, 60) dans au moins un participant cible (80 à 82 ; 100 à 101), dans lequel le flux de données de programme est reproduit ;
mise à disposition de premiers et de deuxièmes paramètres de commande dans un dispositif de commande central (90), qui permet une activation synchronisée des codeurs (20, 25) et d'au moins un dispositif de commutation (90) pour la commutation sans perturbations des canaux de programmes ;
réalisation d'une commutation sans perturbations du premier vers le deuxième canal de programme, avec les étapes suivantes :
transmission des premiers paramètres de commande au moins vers le deuxième codeur (25) qui, en réponse aux premiers paramètres de commande, code le flux de données de programme correspondant au deuxième canal de programme d'une manière prédéterminée ;
transmission des deuxièmes paramètres de commande (90) vers l'au moins un dispositif de commutation (55) qui, en réponse au deuxième paramètre de commande, fait en sorte que l'au moins un dispositif de transmission (50) introduise les flux de données de programme correspondant au deuxième canal de programme dans l'au moins un participant cible (100 à 102) à un moment où une commutation sans perturbations est garantie,
les premiers paramètres de commande indiquant que les flux de données de programme correspondant au premier et au deuxième canal de programme contiennent, pendant un temps prédéterminé, des contenus d'images identiques ou globalement identiques, et les deuxièmes paramètres de commande indiquant quand des flux de données avec des contenus d'images identiques ou globalement identiques arrivent,
les codeurs (20, 25) générant, en réponse aux premiers paramètres de commande, pendant un intervalle de temps prédéterminé, des flux de données de programme avec des contenus d'images identiques ou globalement identiques, et
le dispositif de commutation (55, 65) faisant en sorte, en réponse aux deuxièmes paramètres de commande, que le dispositif de transmission (50, 60) effectuer une commutation du premier vers le deuxième canal de programme avant que les flux de données de programme codés du premier et du deuxième codeur commencent à changer.

2. Procédé selon la revendication 1,
**caractérisé en ce que**
les flux de données de programme contiennent des programmes vidéo ou des programmes vidéo en direct.

3. Procédé selon la revendication 1 ou 2,
**caractérisé en ce que**
les deuxièmes paramètres de commande sont transmis conjointement avec un des flux de données de programme vers le dispositif de commutation (55 ; 65).

4. Procédé selon l'une des revendications 1 à 3,
**caractérisé en ce que**
le deuxième codeur (25) génère, en réponse aux premiers paramètres de commande, à partir des données du flux de données de programme reçu, une information de référence et la transmet au dispositif de commutation (55 ; 65) ; et **en ce que** le dispositif de commutation (55 ; 65) fait en sorte, en réponse aux deuxièmes paramètres de commande, que l'au moins un dispositif de transmission (50, 60) effectue une commutation du premier vers le deuxième canal de programme.

5. Procédé selon la revendication 4,
**caractérisé en ce que**
les codeurs codent les flux de données de programme à distribuer selon le standard MPEG et l'introduisent, dans le cadre d'une longueur déterminée, dans le réseau distributeur et **en ce que** l'information de référence soit un I-Frame.

6. Procédé selon l'une des revendications 1 à 5,
**caractérisé en ce que**
les premières et deuxièmes données de commande sont extraites du contenu provenant des flux de données de programme.

7. Procédé selon la revendication 1,
**caractérisé en ce que**
les premiers paramètres de commande indiquent que les contenus d'images, qui sont contenus dans les flux de données de programme correspondant au premier et au deuxième canal de programme, se rapprochent, **en ce que** les deuxièmes paramètres de commande indiquent quand les contenus d'images des flux de données de programme se sont rapprochés, **en ce que**
les codeurs (20, 25) génèrent, en réponse aux premiers paramètres de commande, pendant un intervalle de temps prédéterminé, des flux de données de programme avec des contenus d'images rapprochés de façon à ce qu'une commutation sans perturbations vers le premier canal de programme soit possible, et **en ce que**
le dispositif de commutation (55, 65) fait en sorte, en réponse aux deuxièmes paramètres de commande, que l'au moins un dispositif de transfert (50, 60) effectue une commutation du deuxième vers le premier canal de programme, dès que les contenus d'images contenus dans les deux flux de données de programme se sont rapprochés de façon à ce qu'une commutation sans perturbations vers le premier canal de programme soit possible.

8. Système de transmission de données (5) pour la transmission de plusieurs flux de données de programme codés vers une pluralité de participants, comprenant
au moins deux codeurs contrôlables (20, 25), chaque codeur (20, 25) étant conçu pour le codage d'un flux de données de programme qui appartient à un canal de programme séparé.
un réseau distributeur (40) pour la distribution des flux de données de programme codés à une pluralité de participants (80 à 82 ; 100 à 102),
au moins un dispositif de transfert contrôlable (50, 60), à laquelle correspond au moins un dispositif de commutation (55, 65) contrôlable de manière centralisée, pour la transmission ciblée de flux de données de programme d'un canal de programme sélectionnable de manière centralisée à au moins un participant, et
un dispositif de commande central (90) qui, en réponse à un événement prédéterminé, pilote aussi bien un des codeurs (20, 25) que le dispositif de commutation (55, 65), de façon à ce que, chez au moins un des participants correspondant au dispositif de commutation (55, 65), une commutation sans perturbations du canal de programme actuellement reproduit vers un canal de programme sélectionné de manière centralisée ait lieu, le dispositif de commande central (90) étant conçu pour la génération d'une première et d'une deuxième instruction de commande, en ce que les codeurs (20, 25) sont conçus pour la génération d'une information de référence en réponse à la première instruction de commande, et en ce que
le dispositif de commutation (55, 65) fait en sorte, en réponse à la deuxième instruction de commande, que le dispositif de transfert (50, 60) correspondant commute du canal de programme actuel vers le canal de programme prédéterminé, de façon à ce que le canal de programme prédéterminé commence par la représentation de l'information de référence,
le dispositif de commande central (90) étant conçu en outre pour la génération de troisièmes et quatrièmes instructions de commande, les codeurs (20, 25) générant, en réponse à la troisième instruction de commande, pendant un intervalle de temps déterminé, des flux de données de programme avec des contenus d'images identiques ou globalement identiques et, après l'écoulement de l'intervalle de temps, les flux de données de programme d'au moins un des codeurs (20, 25) contenant des données supplémentaires, et
le dispositif de commutation (55, 65) faisant en sorte, en réponse à la quatrième instruction de commande, que le dispositif de transfert (50, 60) correspondant commute du canal de programme actuel vers le canal de programme sélectionné de manière centralisée, qui correspond au flux de données de programme contenant les données supplémentaires, tant que les flux de données de programme du premier et du deuxième codeur (20, 25) contiennent des contenus d'images identiques ou presque identiques.

9. Système de transmission de données selon la revendication 8,
**caractérisé en ce que**
l'information de référence est un I-Frame.

10. Système de transmission de données selon la revendication 8 ou 9,
**caractérisé en ce que**
à un participant correspond au moins un dispositif de commutation contrôlable.

11. Dispositif de transmission de données selon l'une des revendications 8 à 10,
**caractérisé en ce que**
les codeurs (20, 25) sont conçus de façon à ce qu'ils peuvent insérer les instructions de commande définies pour le dispositif de commutation dans le flux de données de programme à transmettre.

12. Dispositif de transmission de données selon l'une des revendications 8 à 11,
**caractérisé en ce que**
l'au moins un dispositif de transfert (50, 60) est un point de réplication Multicast.

13. Dispositif de transmission de données selon l'une des revendications 8 à 12,
**caractérisé en ce que**
à chaque participant correspondent un dispositif de transfert et un dispositif de commutation.
